# EUROPEAN PATENT APPLICATION

(11) **EP 2 610 321 A1**
(43) Date of publication of application: **03.07.2013**
(21) Application number: 11819949.6
(22) Date of filing: 24.08.2011
(51) Int. Cl.: C09J 175/04, C09J 133/06

(54) **MOISTURE-CURABLE HOT-MELT ADHESIVE AGENT**

(30) Priority: 26.08.2010 JP 2010189337
(71) Applicant: Henkel Corporation, Rocky Hill, CT 06067 (US)
(72) Inventor: TAMOGAMI, Tsuyoshi, Minoo-shi Osaka 562-8586 (JP); YOSHIDA, Yoshio, Minoo-shi Osaka 562-8586 (JP)
(86) International application number: PCT/JP2011/069039
(87) International publication number: WO 2012/026486

(57) **Abstract**

Disclosed is a moisture-curable hot melt adhesive which has a high initial adhesive strength and is also excellent in adhesion to a slightly adhesive material. The adhesive comprises an urethane prepolymer having an isocyanate group at its end, and (A) an acrylic polymer, wherein the acrylic polymer has a polymer (A1) containing a moiety derived from a (meth)acrylic acid derivative (a1) having an alkyl group with 6 or more carbon atoms. In some embodiments, the acrylic polymer (A) has an alicyclic structure.

## Description

### Technical Field

The present invention relates to a moisture-curable hot melt adhesive and particularly to the moisture-curable hot melt adhesive that is superior in adhesiveness to a slightly adhesive material.

### Background Art

Moisture-curable hot melt adhesives have been used in various fields such as the building-interior material field (or construction material field) and the electronic materials field. The moisture-curable hot melt adhesives are adhesives which contain an urethane prepolymer having an isocyanate group at its end, and whose adhesion strength, heat resistance and so on are generally improved by being applied in a heated and melted state to adherends (or to a substrate and an adherend) and then cooled and solidified to initially bond them, and by moisture-induced curing in which isocyanate groups are cross-linked due to moisture in the atmosphere and thereby the molecular weight of the urethane prepolymer is increased.

Initial adhesive strength is one of properties which the moisture-curable hot melt adhesives are required to have. One means for increasing the initial adhesive strength is a method involving blending a thermoplastic resin with the moisture-curable hot melt adhesive, thereby improving initial cohesive power.

Patent documents 1 and 2 disclose that addition of a low-molecular-weight acrylic resin improves cohesive power and adhesive strength of an urethane hot melt adhesive (see Patent document 1, paragraph No. 0001 and Patent document 2, page 2, left column, lines 32 to 35).

However, the moisture-curable hot melt adhesives of these documents are insufficient with respect to initial adhesive strength because the acrylic resin blended as the thermoplastic resin has a low molecular weight.

Patent document 3 discloses an urethane hot melt adhesive to which a high-molecular-weight acrylic polymer has been added for improving initial adhesive strength (see Patent document 3, claim 1). For some applications, however, the moisture-curable hot melt adhesives are required to have not only initial adhesive strength but also some other properties. For example, in the construction material field, slightly adhesive materials, such as PET (polyethylene terephthalate) materials, e.g., PET film and PET sheet, and polyolefin materials, e.g., PP film, PP sheet, PE film, and PE sheet, may be bonded to various types of substrates, such as wood, plywood, and metal, in producing the outer or inner walls of houses. Therefore, moisture-curable hot melt adhesives for construction materials are required to be superior in adhesiveness to slightly adhesive materials, such as PET materials.

The moisture-curable hot melt adhesive of Patent document 3 exhibits a certain degree of adhesiveness to PET materials at room temperature, but the adhesiveness thereof to PET materials at low temperatures is insufficient.

Thus, moisture-curable hot melt adhesives superior in both initial adhesive strength and adhesiveness to slightly adhesive materials have recently been desired and there is an urgent need for the development thereof.

### Prior Art Documents

### Patent Documents

Patent document 1: JP 6-78515 B

Patent document 2: JP 6-4840 B

Patent document 3: JP 2008-500406 A

### Disclosure of Invention

### Problem to be Solved by the Invention

The present invention was devised to solve such problems and the object thereof is to provide a moisture-curable hot melt adhesive that is high in initial adhesive strength and also is superior in adhesiveness to slightly (or poorly) adhesive materials.

### Means for Solving the Problems

As a result of earnest research, the inventors found surprisingly that addition of a specific acrylic polymer can afford a moisture-curable hot melt adhesive that is high in initial adhesive strength and also is superior in adhesiveness to slightly adhesive materials and thereby have completed the present invention.

The present invention provides, in one aspect, a moisture-curable hot melt adhesive comprising: an urethane prepolymer having an isocyanate group at its end (or terminated with an isocyanate group), and (A) an acrylic polymer, wherein the acrylic polymer (A) includes a polymer (A1) containing a moiety derived from a (meth)acrylic acid derivative (a1) having an alkyl group with 6 or more carbon atoms.

In one embodiment, the present invention provides the moisture-curable hot melt adhesive, wherein the acrylic polymer (A) has an alicyclic structure.

In another embodiment, the present invention provides the moisture-curable hot melt adhesive, wherein the polymer (A1) containing a moiety derived from a (meth) acrylic acid derivative (a1) having an alkyl group with 6 or more carbon atoms has a weight average molecular weight of 30,000 to 250,000.

In a preferred embodiment, the present invention provides the moisture-curable hot melt adhesive, wherein the (meth)acrylic acid derivative (a1) contains at least one selected from cyclohexyl (meth)acrylate and isobornyl (meth)acrylate.

In another preferred embodiment, the present invention provides the moisture-curable hot melt adhesive of which the melt viscosity at 120°C is 6,000 mPa·s to 10,000 mPa·s.

The term "alicyclic structure" as used herein means a cyclic structure derived from an alicyclic compound. The term "alicyclic compound" means any cyclic compound that fails to exhibit chemical properties peculiar to aromatic compounds but has the same reactivity as that of aliphatic compounds while having a cyclic structure of carbon atoms in the carbon skeleton in the molecule thereof. Specific examples of the "alicyclic compound" include cyclohexane, cyclohexene, cyclohexyl (meth)acrylate, and isobornyl (meth)acrylate.

The aromatic compound means any organic compound that has a benzene ring in the molecule thereof. The benzene ring may be fused. Specific examples include benzene, naphthalene, anthracene, biphenyl, and indene.

The "initial adhesive strength" refers to an adhesive strength at the time when a moisture-curable hot melt adhesive was melted and applied to an adherend and then the temperature of the adhesive has decreased and the adhesive has solidified. The initial adhesive strength is influenced by wettability and cohesion of the adhesive. The higher the initial adhesive strength, the more preferred.

The "cohesion" refers to a force caused by interaction between molecules of a moisture-curable hot melt adhesive, wherein the force is produced in the course of cooling of the adhesive which has been heated, melted and applied with an applicator.

### Effect of the Invention

The moisture-curable hot melt adhesive of the present invention is superior in initial adhesive strength and also superior in adhesiveness to slightly (or poorly) adhesive materials, since the adhesive comprises an urethane prepolymer having an isocyanate group at its end (or terminated with an isocyanate group), and (A) an acrylic polymer, wherein the acrylic polymer (A) includes a polymer (A1) containing a moiety derived from a (meth) acrylic acid derivative (a1) having an alkyl group with 6 or more carbon atoms.

When the acrylic polymer (A) has an alicyclic structure, the initial adhesive strength becomes higher and a moisture-curable hot melt adhesive that is superior in adhesiveness to slightly adhesive materials, and especially superior in adhesiveness at low temperatures is obtained.

When the polymer (A1) containing a moiety derived from a (meth)acrylic acid derivative (a1) having an alkyl group with 6 or more carbon atoms has a weight average molecular weight of 30,000 to 250,000, the initial adhesive strength of the moisture-curable hot melt adhesive becomes higher.

When the (meth) acrylic acid derivative (a1) contains at least one selected from cyclohexyl (meth)acrylate and isobornyl (meth)acrylate, the initial adhesive strength and the adhesiveness to slightly adhesive materials, especially the adhesiveness at low temperatures are further improved, so that the moisture-curable hot melt adhesive more suitable for use in the construction material field in a winter season is obtained.

When the melt viscosity at 120°C is 6, 000 mPa·s to 10, 000 mPa·s, the moisture-curable hot melt adhesive of the present invention becomes easy to apply at low temperatures.

### Mode for Carrying Out the Invention

The moisture-curable hot melt adhesive of the present invention comprises an "urethane prepolymer having an isocyanate group at its end (or terminated with an isocyanate group)".

The "urethane prepolymer having an isocyanate group at its end" according to the present invention is a substance usually understood as an "urethane prepolymer" and it is not particularly restricted as long as the intended moisture-curable hot melt adhesive can be obtained therefrom if it "has an isocyanate group at its end (or is terminated with an isocyanate group)". Such an urethane prepolymer is obtained by the reaction of a polyol with an isocyanate compound in accordance with a known method. In this description, the "urethane prepolymer having an isocyanate group at its end" is also referred to simply as an "urethane prepolymer."

The "polyol" in this description is not particularly restricted if the intended urethane prepolymer can be obtained, and publicly known polyols used in ordinary polyurethane production can be used as the "polyol." Polyols having 1-3 functional groups are preferred, and bifunctional polyol referred to as diol is particularly preferred. The polyol can be used alone or in combination.

Examples of the diol include low-molecular-weight diols having 2 to 12 carbon atoms, such as ethylene glycol, 1-methylethylene glycol, 1-ethylethylene glycol, propylene glycol, butanediol, pentanediol, hexanediol, heptanediol, octanediol, nonanediol, decanediol, dodecanediol, neopentyl glycol, 2-methyl-1,3-propanediol, cyclohexane dimethanol, and 2,4-dimethyl-1,5-pentanediol. Preferred is at least one selected from ethylene glycol, butanediol, hexanediol, octanediol, and decanediol. These diols can be used alone or in combination.

As the "polyol" in the present invention, a polyether polyol and a polyester polyol, for example, can be used.

Examples of the polyether polyol include polyoxytetramethylene glycol (PTMG), polyoxypropylene glycol (PPG), polyoxyethylene glycol (PEG) and the like. The polyoxypropylene glycol is particularly preferred as the polyether polyol.

Examples of the polyester polyol in the present invention include aliphatic polyester polyols and aromatic polyester polyols.

The aliphatic polyester polyols can be obtained by the reaction of an aliphatic dicarboxylic acid with a diol. Examples of the aliphatic dicarboxylic acid include adipic acid, sebacic acid, azelaic acid, and decamethylene dicarboxylic acid. These may be used alone or two or more of them may be used in combination. Examples of the aliphatic polyester polyol include polyhexamethylene adipate (PHMA) and polybutylene adipate (PBA).

As to the aromatic polyester polyol, preferred is a polyester polyol obtainable by the reaction of an aromatic poly(or di)carboxylic acid with a diol. Examples of the aromatic poly(or di)carboxylic acid include phthalic acid, isophthalic acid, and terephthalic acid. These may be used alone or two or more of them may be used in combination. Examples of the aromatic polyester polyol include polyalkylene phthalates, polyalkylene isophthalates, and polyalkylene terephthalates.

The isocyanate compound in the present invention is not particularly restricted if the intended urethane prepolymer can be obtained therefrom and any isocyanate compound that is usually used for the production of polyurethane can be used. The number of isocyanate groups contained per molecule in the isocyanate compound is preferably an average of 1-3 groups, and a bifunctional isocyanate compound referred to as diisocyanate compound is particularly preferred. The isocyanate compounds can be used alone or two or more of them can be used in combination.

Examples of the "isocyanate compound" include ethylene diisocyanate, ethylidene diisocyanate, propylene diisocyanate, butylene diisocyanate, hexamethylene diisocyanate, toluene diisocyanate, cyclopentylene-1,3-diisocyanate, cyclohexylene-1,4-diisocyanate, cyclohexylene-1,2-diisocyanate, 4,4'-diphenylmethane diisocyanate, 2,2'-diphenylpropane-4,4'-diisocyanate, p-phenylene diisocyanate, m-phenylene diisocyanate, xylylene diisocyanate, 1,4-naphthylene diisocyanate, 1,5-naphthylene diisocyanate, diphenyl-4,4'-diisocyanate, azobenzene-4,4'-diisocyanate, diphenyl sulfone-4,4'-diisocyanate, dichlorohexamethylene diisocyanate, furfurylidene diisocyanate, and 1-chlorobenzene-2,4-diisocyanate. The isocyanate compounds can be used alone or in combination.

When producing the "urethane prepolymer" of the present invention, a mono-ol or a mono-isocyanate can be used as long as the intended urethane prepolymer is obtained, and while a trifunctional polyol and a trifunctional isocyanate can be used, it is preferred to produce the urethane prepolymer using a bifunctional polyol (i.e., a diol) and a bifunctional isocyanate (i.e., a diisocyanate).

To produce the "urethane prepolymer" by the reaction of the bifunctional polyol with the bifunctional isocyanate is more preferred from the standpoints of heat stability of the moisture-curable hot melt adhesives to be obtained and the control of the production method (and the production steps thereof). In addition, use of 2 moles of the bifunctional isocyanate per mole of the bifunctional polyol is preferred because the intended urethane prepolymer can be produced relatively easily.

The moisture-curable hot melt adhesive according to the present invention is produced by mixing the above-mentioned "urethane prepolymer" with an acrylic polymer (A) together.

Specifically, the moisture-curable hot melt adhesive may be produced by mixing the "urethane prepolymer" with the acrylic polymer (A), and may also be produced by mixing the polyol and the isocyanate compound, which are precursors of the urethane prepolymer, with the acrylic polymer (A), thereby reacting the polyol with the isocyanate.

The moisture-curable hot melt adhesive according to the present invention contains the acrylic polymer (A). The acrylic polymer (A) contains a polymer (A1) containing a moiety derived from a (meth)acrylic acid derivative (a1) having an alkyl group with 6 or more carbon atoms.

The acrylic polymer (A) may contain, in addition to (A1), a polymer (A2) containing no moieties derived from a (meth)acrylic acid derivative (a1) having an alkyl group with 6 or more carbon atoms (that is, an acrylic polymer other than (A1)).

In this description, the "(meth)acrylic acid derivative" means both a methacrylic acid derivative and an acrylic acid derivative; when the term "methacrylic acid derivative" is simply used, this may include methacrylic acid itself. When the term "acrylic acid derivative" is simply used, this may include acrylic acid itself.

In this description, the (meth)acrylic acid derivative (a) includes (meth) acrylic acid derivatives (a1) having an alkyl group with 6 or more carbon atoms, (meth)acrylic acid derivatives (a2) having an alkyl group with less than 6 carbon atoms, (meth)acrylic acids (a3), (meth) acrylic acid derivatives (a4) having an aryl group, and other (meth)acrylic acid derivatives (a5).

Examples of the (meth)acrylic acid derivatives (a1) having an alkyl group with 6 or more carbon atoms include: (meth) acrylic acid esters, such as n-hexyl (meth) acrylate, cyclohexyl (meth)acrylate, n-octyl (meth)acrylate, 2-ethylhexyl (meth)acrylate, decyl (meth)acrylate, isobornyl (meth)acrylate, dodecyl (or lauryl) (meth)acrylate, and stearyl (meth)acrylate; (meth)acrylic acid amides, such as N-hexyl acrylic acid amide, N-cyclohexyl acrylic acid amide, and N-octyl acrylic acid amide; and other derivatives, such as 2-(meth)acryloyloxyethylhexahydrophthalic acid, and the like.

The (meth)acrylic acid esters are preferably alkyl esters of (meth)acrylic acid and the (meth)acrylic acid amides are preferably (meth)acrylic acid alkylamides.

The alkyl groups may have either a cyclic structure (e.g., cyclohexyl and isobornyl) or a chain-like structure (e.g., n-hexyl and decyl), which may have either a straight chain form (e.g., n-hexyl and n-octyl) or a branched chain form (e.g., 2-ethylhexyl); while the alkyl groups may or may not have a substituent (e.g., a hydroxyl group, an amino group, a carboxyl group, a glycidyl group, a (meth)acryloyl group, and a methoxy group), and the like, they are preferred to have no substituents.

The (meth) acrylic acid derivatives (a1) having an alkyl group with 6 or more carbon atoms preferably include (meth)acrylic acid esters having an alkyl group with 6 or more carbon atoms.

Such (meth)acrylic acid derivatives (a1) may be used alone or two or more kinds of them may be used in combination.

In the present invention, the (meth)acrylic acid derivatives (a1) preferably include alicyclic compounds. Examples of the alicyclic compounds include cyclohexyl (meth)acrylate and isobornyl (meth)acrylate; at least one selected from these is preferred, and especially isobornyl methacrylate and cyclohexyl methacrylate are preferred.

Examples of the (meth)acrylic acid derivatives (a2) having an alkyl group with less than 6 carbon atoms include: (meth)acrylic acid esters, such as methyl (meth)acrylate, ethyl (meth)acrylate, n-propyl (meth)acrylate, isopropyl (meth)acrylate, n-butyl (meth)acrylate, isobutyl (meth)acrylate, and tert-butyl (meth)acrylate; (meth)acrylic acid amides, such as N,N-dimethyl acrylic acid amide, N-butyl acrylic acid amide, and N-propyl acrylic acid amide; and other derivatives, such as 2-(meth)acryloyloxyethyl succinic acid, and the like.

The (meth)acrylic acid esters are preferably (meth)acrylic acid alkyl esters and the (meth)acrylic acid amides are preferably (meth)acrylic acid alkylamides.

The alkyl groups may have either a cyclic structure (e.g., cyclopentyl) or a chain-like structure (e.g., methyl, ethyl, and propyl), which may have either a straight chain form (e.g., n-propyl and n-butyl) or a branched chain form (e.g., isobutyl and tert-butyl); while the alkyl groups may or may not have a substituent (e.g., a hydroxyl group, an amino group, a carboxyl group, a glycidyl group, a (meth)acryloyl group, and a methoxy group), and the like, they are preferred to have no substituents.

The (meth) acrylic acid derivatives (a2) having an alkyl with having less than 6 carbon atoms preferably include the (meth) acrylic acid esters having an alkyl group with less than 6 carbon atoms.

Such (meth) acrylic acid derivatives (a2) having an alkyl group with less than 6 carbon atoms may be used alone or two or more kinds of them may be used in combination.

The (meth)acrylic acids (a3) include at least one selected from acrylic acid and methacrylic acid.

Examples of the (meth)acrylic acid derivatives (a4) having an aryl group include: (meth)acrylic acid aryl esters, such as benzyl (meth)acrylate, phenoxyethyl (meth)acrylate, and 4-hydroxyphenyl (meth)acrylate; and, (meth)acrylic acid amides, such as 3,5-dimethyl- 4-hydroxybenzyl (meth)acrylic acid amide. Such (meth) acrylic acid derivatives (a4) having an aryl group may be used singly or two or more kinds of them may be used in combination.

Other (meth)acrylic acid derivatives (a5) include, for example, acrylonitrile, methacrylonitrile, acrylamide, methacrylamide, and the like.

Such other (meth)acrylic acid derivatives (a5) may be used singly or two or more kinds of them may be used in combination.

The (meth)acrylic acid derivative (a) may contain a radically polymerizable monomer containing an ethylenic double bond other than the (meth)acrylic acid derivative (a) as long as the moisture-curable hot melt adhesive intended by the present invention is obtained, and examples of such monomers include styrene, alkyl styrenes, butadiene, vinyl esters, vinyl ethers, and esters of crotonic acid, maleic acid, fumaric acid, itaconic acid, and the like.

It is possible to produce the acrylic polymer (A) containing a polymer (A1) containing a moiety derived from a (meth)acrylic acid derivative (a1) having an alkyl group with 6 or more carbon atoms by radically polymerizing the (meth)acrylic acid derivative (a) containing a (meth)acrylic acid derivative (a1) having an alkyl group with 6 or more carbon atoms.

When the (meth) acrylic acid derivative (a1) contains an alicyclic compound, it is possible to produce the acrylic polymer (A) having an alicyclic structure.

When the (meth) acrylic acid derivative (a) contains the (meth)acrylic acid derivative (a2) having an alkyl group with less than 6 carbon atoms in addition to the (meth) acrylic acid derivative (a1) having an alkyl group with 6 or more carbon atoms, a copolymer of (a1) and (a2) is obtained and this also corresponds to (A1).

When the (meth)acrylic acid derivative (a) does not contain the (meth) acrylic acid derivative (a1) and contains at least one selected from (a2) through (a5), the acrylic polymer to be obtained by polymerization becomes a polymer (A' 2) failing to contain a moiety derived from the (meth) acrylic acid (a1) having an alkyl group with 6 or more carbon atoms.

As the method for producing the acrylic polymer (A) by radical polymerization of the (meth) acrylic acid derivative (a), any production method by which the intended moisture-curable hot melt adhesive can be obtained can be used without any particular restrictions. Generally, the acrylic polymer (A) can be produced using solution polymerization, bulk polymerization, suspension polymerization, or the like.

In the present invention, the polymer (A1) containing a moiety derived from a (meth)acrylic acid derivative (a1) having an alkyl group with 6 or more carbon atoms preferably has a weight average molecular weight (Mw) of from 30,000 to 250,000. When the Mw of (A1) is within the above range, a moisture-curable hot melt adhesive superior in initial adhesive strength is obtained.

In this description, the Mw is a value measured by gel permeation chromatography (GPC) even if it is either the Mw of (A1) or the Mw of other components. More specifically, the Mw is a value measured using the following GPC instrument and measuring method. 600E manufactured by Waters was used as the GPC instrument and R1 (Waters410) was used as a detector. As a GPC column, two columns named LF-804 manufactured by Shodex were used. The Mw was determined by dissolving a sample in tetrahydrofuran, then flowing the solution at a flow rate of 1.0 ml/min and a column temperature of 40°C, and performing conversion (or calibration) of a molecular weight by using a standard (or calibration) curve prepared with polystyrenes having monodispersed molecular weights as standard substances.

The moisture-curable hot melt adhesive of the present invention preferably has a melt viscosity at 120°C of from 6,000 mPa·s to 10,000 mPa·s, more preferably from 7,000 mPa·s to 10,000 mPa·s, and particularly preferably from 7,000 mPa·s to 9,000 mPa·s.

If the melt viscosity at 120°C is from 6,000 mPa·s to 10,000 mPa·s, the moisture-curable hot melt adhesive of the present invention can be applied at low temperatures and therefore can suitably be used outdoor in a winter season. In this description, the melt viscosity at 120°C is a value determined by melting a moisture-curable hot melt adhesive at 120°C and then measuring a viscosity at 120°C by using a Brookfield viscometer (manufactured by Brookfield Engineering Laboratories, Inc.). In measuring the viscosity, a No. 27 Spindle was used.

The moisture-curable hot melt adhesive of the present invention can contain other additives as long as they give no adverse effects to the reaction between the polyol and the isocyanate compound so as to form the urethane prepolymer and the moisture-curable hot melt adhesive intended by the present invention can be obtained. The timing of adding the additive to the moisture-curable hot melt adhesive is not particularly restricted as long as the moisture-curable hot melt adhesive intended by the present invention can be obtained. The additive may be added together with the polyol and the isocyanate compound when synthesizing the urethane prepolymer and it also may be added after reacting the polyol with the isocyanate compound, thereby synthesizing the urethane prepolymer.

The "additive" is a substance typically used for moisture-curable hot melt adhesives and it is not particularly restricted as long as it can give the moisture-curable hot melt adhesive intended by the present invention. Examples of such additives include plasticizers, antioxidants, pigments, light stabilizers, flame-retardants, catalysts, and waxes, and the like.

Examples of the "plasticizers" include dioctyl phthalate, dibutyl phthalate, dioctyl adipate, and mineral spirits.

Examples of the "antioxidants" include phenol-based antioxidants, phosphite-based antioxidants, thioether-based antioxidants, and amine-based antioxidants.

Examples of the "pigments" include titanium oxide and carbon black.

Examples of the "light stabilizers" include benzotriazole, hindered amine, benzoate, and benzotriazole.

Examples of the "flame retardants" include halogen-containing flame-retardants, phosphorus-containing flame-retardants, antimony-containing flame retardant, and metal hydroxide-based flame-retardants.

Examples of the "catalysts" include metal-containing catalysts, such as tin-containing catalysts (e.g., trimethyltin laurate, trimethyltin hydroxide, dibutyltin dilaurate, and dibutyltin maleate), lead-containing catalysts (e.g., lead oleate, lead naphthenate, and lead octenate), and other metal-containing catalysts (e.g., metal naphthenates such as cobalt naphthenate); and amine-based catalysts, such as triethylene diamine, tetramethylethylene diamine, tetramethylhexylene diamine, diazabicycloalkenes, and dialkylaminoalkylamines.

Examples of the "waxes" include waxes such as paraffin wax and microcrystalline wax.

The moisture-curable hot melt adhesive of the present invention is a solid at normal temperature (15 to 30°C) and therefore can be used in the fields in which moisture-curable hot melt adhesives have heretofore been used. In addition, it can be used for exterior materials and interior materials for building materials, wooden floor, lamination of a decorative sheet onto a base material, profile wrapping, and the like that require high initial adhesive strength.

The aforementioned moisture-curable hot melt adhesive is suitable when a decorative material as a building interior material is bonded to floors, but the moisture-curable hot melt adhesive is not limited to bonding to floors and it can bond a decorative sheet to other substrates as well. Accordingly, the moisture-curable hot melt adhesive of the present invention can also be used for carpentry, paper converting, textile processing, and for other general purposes.

In the present invention, the moisture-curable hot melt adhesive can be used by the same methods as those for conventional moisture-curable hot melt adhesives and the method of its use is not particularly limited. In addition, for example, when an adherend is bonded to a substrate, the moisture-curable hot melt adhesive may be applied to the substrate and/or the adherend.

The "adherend" may be one usually used and is not particularly restricted, and specific examples thereof include films and sheets.

The films may be either colorless or colored and either transparent or opaque, and examples thereof include films made from polyolefin resin, polyester resin, acetate resin, polystyrene resin, and vinyl chloride resin. Examples of the polyolefin resin include polyethylene and polypropylene, whereas examples of the polyester resin include polyethylene terephthalate.

Examples of the decorative sheet include the following. Sheets made of plastic materials, such as rigid or semi-rigid vinyl chloride resin, polyolefin resin, and polyester resin; sliced veneer prepared by processing wood into a sheet form; and, decorative paper provided with various decorative prints.

While the "substrate" is not particularly restricted in the present invention and substrates that have usually been used can be used, examples thereof include the following: woody materials, such as plywood, e.g. lauan plywood, medium density fiberboard (MDF), particle board, solid wood, and woody fiber board; inorganic materials, such as cement board, gypsum board, and autoclaved lightweight concrete (ALC); and plastic materials, such as vinyl chloride resin, polyolefin resin, and polyester resin.

In the present invention, the "slightly adhesive material" means a material that has generally been reported as being difficult to be bonded with an adhesive and examples thereof include "adherends", such as polyethylene terephthalate (PET) film, polypropylene (PP) film, polyethylene (PE) film, PET sheet, polypropylene (PP) sheet, and polyethylene (PE) sheet, and "substrates", such as PET resin, PP resin, and PE resin.

The moisture-curable hot melt adhesive of the present invention can be used suitably for producing a laminated article by bonding an "adherend" and a "substrate" together when at least one of the "adherend" and the "substrate" is a "slightly adhesive material."

The laminated articles obtained by bonding the adherend and the substrate with the moisture-curable hot melt adhesive of the present invention can be used for various applications, such as specifically building materials, electronic materials, and in the automotive field.

It is not necessary to use any special apparatus in the manufacture of the laminated articles and they can be manufactured by using a generally known production apparatus such as a conveyer, a coater, a pressing machine, a heater, and a cutting machine.

For example, a laminated article can be manufactured as follows. While feeding a substrate and an adherend with a conveyer, the moisture-curable hot melt adhesive of the present invention is applied to the substrate or the adherend. The temperature to be used during the application is controlled to a prescribed temperature by using a heater. The adherend is pressed lightly to the substrate with a pressing machine, so that the adherend and the substrate are bonded together via the moisture-curable hot melt adhesive. Afterwards, the adherend and the substrate bonded together are allowed to cool and then the moisture-curable hot melt adhesive is cured while conveying it with the conveyer. Then, the substrate with the adherend bonded thereon was cut into an appropriate size with a cutting machine.

In such laminated articles, the substrate and the adherend become difficult to delaminate from each other even in winter since the moisture-curable hot melt adhesive of the present invention is high in initial adhesive strength and superior in adhesiveness also to slightly adhesive materials, especially adhesiveness to slightly adhesive materials at low temperatures.

Moreover, a worker (or operator) is also able to produce a laminated article by applying the adhesive without using a coater.

Main embodiments of the present invention are described below.
1. A moisture-curable hot melt adhesive comprising an urethane prepolymer having an isocyanate group at its end (or terminated with an isocyanate group) and an acrylic polymer (A), wherein the acrylic polymer (A) has a polymer (A1) containing a moiety derived from a (meth)acrylic acid derivative (a1) having an alkyl group with 6 or more carbon atoms.
2. The moisture-curable hot melt adhesive according to the above 1, wherein the acrylic polymer (A) has an alicyclic structure.
3. The moisture-curable hot melt adhesive according to the above 1 or 2, wherein the polymer (A1) containing a moiety derived from a (meth) acrylic acid derivative (a1) having an alkyl group with 6 or more carbon atoms has a weight average molecular weight of 30, 000 to 250,000.
4. The moisture-curable hot melt adhesive according to any one of the above 1 to 3, wherein the (meth) acrylic acid derivative (a1) contains at least one selected from cyclohexyl (meth)acrylate and isobornyl (meth)acrylate.
5. The moisture-curable hot melt adhesive according to any one of the above 1-4, wherein the melt viscosity at 120°C is 6, 000 mPa·s to 10,000 mPa·s.

### Examples

The present invention is illustrated with reference to Examples and Comparative Examples, but these examples are for explaining the present invention and do not limit the present invention at all.

Components of moisture-curable hot melt adhesives to be used in Examples and Comparative Examples are given below. Weight average molecular weight (Mw) of each component is a value measured by gel permeation chromatography (GPC). The measurement of Mw is carried out under the same conditions as those already described.
(A) Acrylic polymer
   (A1) Polymers derived from (meth) acrylic acid derivatives (a1) having an alkyl group with 6 or more carbon atoms
      (A1-1) A polymer which is derived from a (meth)acrylic acid derivative (a1) having an alkyl group with 6 carbon atoms and has an alicyclic structure (weight average molecular weight (Mw) : 38, 000)
      (A1-2) A polymer that is derived from a (meth)acrylic acid derivative (a1) having an alkyl group with 6 carbon atoms and has an alicyclic structure (weight average molecular weight (Mw) : 65, 000)
      (A1-3) A polymer that is derived from a (meth)acrylic acid derivative (a1) having an alkyl group with 6 carbon atoms and has an alicyclic structure (weight average molecular weight (Mw): 100,000)
      (A1-4) A polymer that is derived from a (meth)acrylic acid derivative (a1) having an alkyl group with 10 carbon atoms and has an alicyclic structure (weight average molecular weight (Mw): 100,000)
      (A1-5) A polymer that is derived from a (meth)acrylic acid derivative (a1) having an alkyl group with 10 carbon atoms and has an alicyclic structure (weight average molecular weight (Mw): 95,000)
      (A1-6) A polymer that is derived from a (meth)acrylic acid derivative (a1) having an alkyl group with 13 carbon atoms and has a straight chain structure (weight average molecular weight (Mw): 110,000)
      (A'2) Polymers containing no moieties derived from (meth) acrylic acid derivatives (a1) having an alkyl group with 6 or more carbon atoms
         (A'2-1) A polymer that contains a moiety derived from a (meth) acrylic acid derivative (a2) having an alkyl group with 4 carbon atoms and has a straight chain structure (Mw: 3,000; UP1000 (trade name) produced by Toagosei Co., Ltd.)
         (A'2-2) A polymer that contains a moiety derived from a (meth) acrylic acid derivative (a2) having an alkyl group with 4 carbon atoms and has a straight chain structure (Mw: 7, 800; HM-8 (trade name) produced by Toagosei Co., Ltd.)
         (A'2-3) A polymer that contains a moiety derived from a (meth) acrylic acid derivative (a2) having an alkyl group with 4 carbon atoms and has a straight chain structure (Mw: 35,000; BR113 (trade name) produced by Mitsubishi Rayon Co., Ltd.)
         (A'2-4) A polymer that contains a moiety derived from a (meth) acrylic acid derivative (a2) having an alkyl group with 4 carbon atoms and has a straight chain structure (Mw: 160,000)
         (A'2-5) A polymer that contains a moiety derived from a (meth) acrylic acid derivative (a2) having an alkyl group with 4 carbon atoms and has a straight chain structure (Mw: 270,000)
         (A'2-6) A polymer that contains a moiety derived from a (meth) acrylic acid derivative (a2) having an alkyl group with 4 carbon atoms and has a straight chain structure (Mw: 100,000)
Syntheses of the above-mentioned polymer (A1-1) through polymer (A'2-6) are described later.

### Polyol

Polyol (1)
   (HIFLEX D2000 (trade name) produced by Dai-Ichi Kogyo Seiyaku Co., Ltd., Mw: 2,000)
Polyol (2)
   (HIFLEX D400 (trade name) produced by Dai-Ichi Kogyo Seiyaku Co., Ltd., Mw: 400)
Polyol (3)
   (HS 2H-351A (trade name) produced by Hokoku Corporation, Mw: 3,500)

### Isocyanate compound

4,4'-Diphenylmethane diisocyanate (hereinafter also referred to as "MD1") (MILLIONATE MT (trade name) by Nippon Polyurethane Industry Co., Ltd.)

### Other additives

Initiators
   Azobisisobutyronitrile (AIBN, produced by Otsuka Chemical Co., Ltd.)
   Lauroyl peroxide (PEROYL L (trade name) produced by NOF Corporation)
Chain transfer agent
   Alpha-methylstyrene dimer (Nofmer MSD (trade name) produced by NOF Corporation)

### Synthesis of acrylic polymer(A)

The various acrylic polymers (A) were produced by polymerizing (meth)acrylic acid derivatives (a1) having an alkyl group with 6 or more carbon atoms and (meth)acrylic acid derivatives (a2) having an alkyl group with less than 6 carbon atoms.

The (meth)acrylic acid derivatives (a1) and the (meth)acrylic acid derivatives (a2) for use as raw materials of the acrylic polymers (A) are described below.
(a1-1) Cyclohexyl methacrylate (hereinafter also referred to as "CHMA")
(a1-2) Isobornyl acrylate (IB-XA (trade name) produced by Kyoeisha Chemical Co., Ltd.)
(a1-3) Isobornyl methacrylate (IB-X (trade name) produced by Kyoeisha Chemical Co., Ltd.)
(a1-4) A mixture of a methacrylic acid ester having an alkyl group with 12 carbon atoms and a methacrylic acid ester having an alkyl group with 13 carbon atoms (AN-134 (trade name) produced by Sanyo Chemical Industries, Ltd.)
(a2-1) Methyl methacrylate (hereinafter also referred to as "MMA")
(a2-2) Butyl methacrylate (hereinafter also referred to as "BMA")
(a2-3) Butyl acrylate (hereinafter also referred to as "BA")
(a3-1) Methacrylic acid (hereinafter also referred to as "MAA")

Methods for producing acrylic polymers (A) are described below.
(A1-1) Production of polymer
(a1-1) Cyclohexyl methacrylate 60 g
(a2-1) Methyl methacrylate 150 g
(a2-2) Butyl methacrylate 60 g
(a2-3) Butyl acrylate 30 g
(a3-1) Methacrylic acid 1.5 g

A monomer mixed solution of 301.5 g in total was prepared by mixing the above-described weights of component (a1-1) through component (a3-1). Then, 434 g of polyol (1) (HIFLEX D2000) as a solvent and 1 g of alpha-methylstyrene dimer as a chain transfer agent were charged into a 2-L reaction vessel, then 100 g of the above-mentioned monomer mixed solution was charged into the reaction vessel, and further 3 g of azobisisobutyronitrile (AIBN) as a polymerization initiator was added to the reaction vessel.

After attaching a stirring blade, a reflux tube, a thermometer, and so on to the reaction vessel, the reaction vessel was put in a hot bath of 80°C, and then a polymerization reaction was started with stirring the mixed solution in the vessel. After about 20 minutes from confirming the generation of heat of reaction, the remainder (201.5 g) of the monomer mixed solution was dropped over about 2 hours.

After 30 minutes from the completion of the dropping, 0.15 g of AIBN was added three times every 30 minutes. For about 2 hours following the addition of AIBN, stirring was performed at 90°C. After the completion of the stirring, the formed acrylic polymer preparation liquid was taken out from the reaction vessel. The preparation liquid had an acrylic polymer concentration of 41.0% by weight.

### Productions of (A1-2) to (A1-6) and (A'2-4) to (A'2-6)

Acrylic polymers (A1-2) to (A1-6) and (A'2-4) to (A'2-6) were produced by mixing component (a1-1) to component (a3-1) in the weights shown in the following Table 1 with the same method as the production of the above-described polymer (A1-1). While commercial products were used as received as polymers (A'2-1) to (A'2-3), compositions of the monomers are as shown in Table 1.

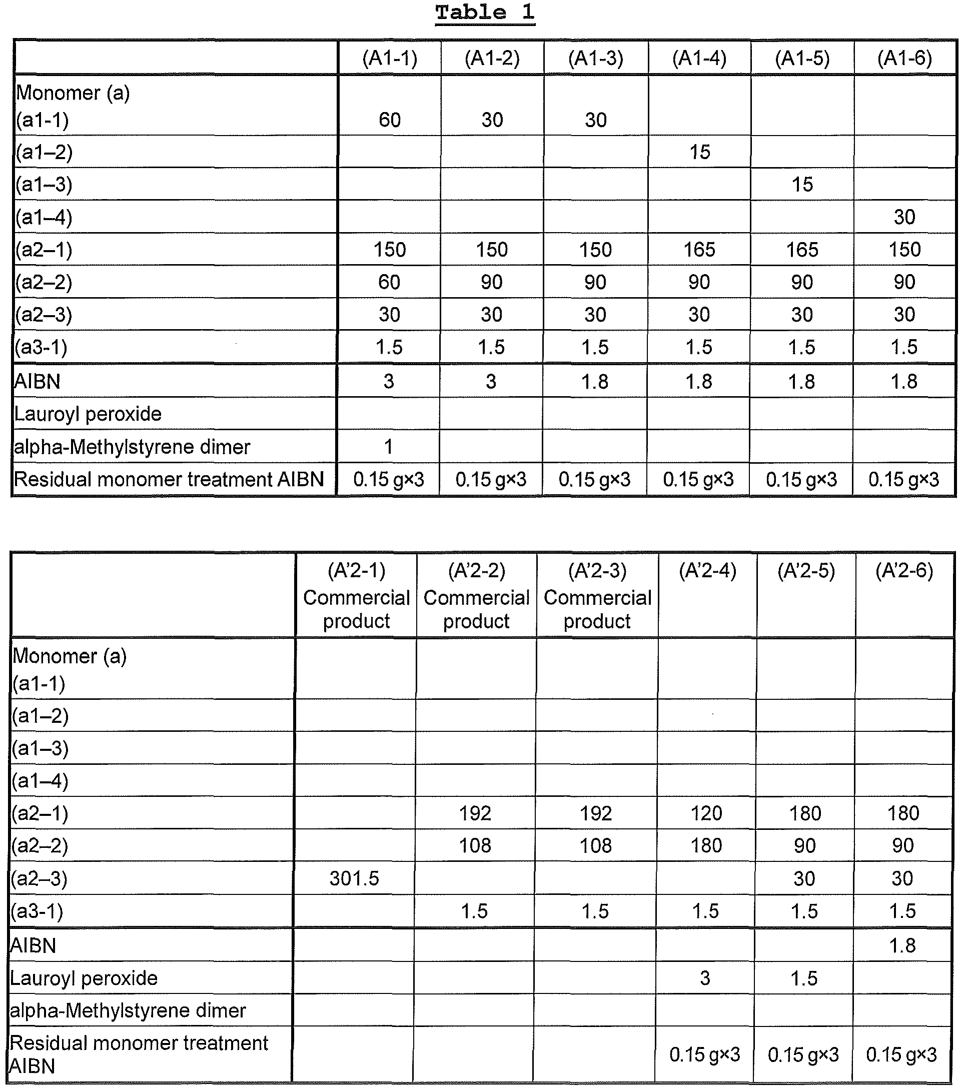

### Production of moisture-curable hot melt adhesive

Production of the moisture-curable hot melt adhesives of Examples 1 to 6 and Comparative Examples 1 to 5.

The moisture-curable hot melt adhesives were produced by mixing the polyols, the isocyanate compounds, and the acrylic polymers (A) in the parts by weight (compositions) shown in Table 2. Specifically, a polyol and an acrylic polymer (A) were charged into a reaction vessel and were stirred under reduced pressure for one hour. After removing moisture, an isocyanate compound (4, 4' -diphenylmethane diisocyanate) was added at the same temperature and was stirred under reduced pressure for an additional two hours, so that the moisture-curable hot melt adhesive was obtained.

However, the parts by weight of the acrylic polymers (A) shown in Table 2 are values (expressed by solid content) after removing a solvent.

**Table 2**

| | | | Monomer composition of acrylicopolymer | Mw | Example 1 | Example 2 | Example 3 | Example 4 | Example 5 | Example 6 |
|---|---|---|---|---|---|---|---|---|---|---|
| Polyol | | (1) | | 2000 | 41.4 | 41.4 | 41.5 | 41.5 | 41.5 | 41.5 |
| | | (2) | | 400 | 2.3 | 2.3 | 4.6 | 4.6 | 4.6 | 4.6 |
| | | (3) | | 3500 | 17.0 | 17.0 | 21.0 | 21.0 | 21.0 | 21.0 |
| Isocyanate compound | | MDI | | | 14.3 | 14.3 | 18.2 | 18.2 | 18.2 | 18.2 |
| Acrylic polymer | (A1) | (A1-1) | MMA/BMA/BA /CHMA/MAA | 38000 | 17.0 | | | | | |
| | | (A1-2) | MMA/BMA/BA /CHMA/MAA | 65000 | | 8.0 | | | | |
| | | (A1-3) | MMA/BMA/BA /CHMA/MAA | 100000 | | | 19.2 | | | |
| | | (A1-4) | MMA/BMA/BA /IB-XA/MAA | 100000 | | | | 19.2 | | |
| | | (A1-5) | MMA/BMABA /IBX/MAA | 95000 | | | | | 19.2 | |
| | | (A1-6) | MMA/BMA/BA /AN-134/MAA | 110000 | | | | | | 19.2 |
| | (A2) | (A2-1) | BA | 3000 | | | | | | |
| | | (A2-2) | MMA/BMA/MAA | 7800 | | | | | | |
| | | (A2-3) | MMA/BMA/MAA | 35000 | | 17.0 | | | | |
| | | (A2-4) | MMA/BMA/MAA | 160000 | | | | | | |
| | | (A2-5) | MMA/BMA/MAA | 270000 | | | | | | |
| | | (A2-6) | MMA/BMA/BA/MAA | 100000 | 8.0 | | | | | |
| Total | | | | | 100.0 | 100.0 | 104.5 | 104.5 | 104.5 | 104.5 |
| Viscosity (melt viscosity at 120°C mPa·s) | | | | | 9000 | 8500 | 8240 | 7300 | 7000 | 8500 |
| Initial creep at 35°C (100 g/25 mm) | | | | | 80 mm ○ | 60mm ○ | 30mm ⊙ | 30mm ⊙ | 20mm ⊙ | 60mm ○ |
| PET adhesion at room temperature (kg/25 mm) | | | | | 3.5 or more MF ⊙ | 3.5 or more MF ⊙ | 3.5 or more MF ⊙ | 3.5 or more MF ⊙ | 3.5 or more MF ⊙ | 3.5 or more MF ⊙ |
| PET adhesion at 10°C (kg/25 mm) | | | | | 3.5 or more MF/AF ⊙ | 3.5 or more MF/AF ⊙ | 3.5 or more MF/AF ⊙ | 3.5 or more MF ⊙ | 3.5 or more MF ⊙ | 3.5 or more MF ⊙ |
| PET adhesion at 5°C (kg/25 mm) | | | | | 3.0-3.5 MF/AF | 3.0-3.5 MF/AF | 3.0-3.5 MF/AF | 25-3.0 MF/AF | 25-3.0 MF/AF | 25-3.0 MF/AF |

| | | | Monomer composition of acrylicpolymer | Mw | Comparative Example1 | Comparative Example2 | Comparative Example3 | Comparative Example4 | Comparative Example5 | |
|---|---|---|---|---|---|---|---|---|---|---|
| Polyol | | (1) | | 2000 | | | 40.8 | 41.5 | 41.4 | |
| | | (2) | | 400 | | | | 4.6 | 2.3 | |
| | | (3) | | 3500 | 86.3 | 63.9 | 23.6 | 21.0 | 17.0 | |
| Isocyanate compound | | MDI | | | 13.7 | 8.7 | 13.9 | 13.9 | 14.3 | |
| Acrylic polymer | (A1) | (A1-1) | MMA/BMA/BA/CHMA/MAA | 38000 | | | | | | |
| | | (A1-2) | MMA/BMA/BA/CHMA/MAA | 65000 | | | | | | |
| | | (A1-3) | MMA/BMA/BA/CHMA/MAA | 100000 | | | | | | |
| | | (A1-4) | MMA/BMA/BA/IB-XA/MAA | 100000 | | | | | | |
| | | (A1-5) | MMA/BMA/BA/IBX/MAA | 95000 | | | | | | |
| | | (A1-6) | MMA/BMA/BA/AN-134/MAA | 110000 | | | | | | |
| | (A2) | (A2-1) | BA | 3000 | | 27.4 | | | | |
| | | (A2-2) | MMA/BMA/MAA | 7800 | | | 12.8 | | | |
| | | (A2-3) | MMA/BMA/MAA | 35000 | | | 8.3 | | 17.0 | |
| | | (A2-4) | MMA/BMA/MAA | 160000 | | | | | 8.0 | |
| | | (A2-5) | MMA/BMA/MAA | 270000 | | | | 19.0 | | |
| | | (A2-6) | MMA/BMA/BA/MAA | 100000 | | | | | | |
| Total | | | | | 100.0 | 100.0 | 99.7 | 100.0 | 100.0 | |
| Viscosity (melt viscosity at 120°C mPa·s) | | | | | 7000 | 5000 | 5000 | 53000 | 23000 | |
| Initial creep at 35°C (100 g/25 mm) | | | | | less than 1 minute x | less than 1 minute x | less than 1 minute x | 80 mm ○ | 9 minutes Δ | |
| PET adhesion at room temperature (kg/25 mm) | | | | | less than 1.0 AF x | less than 1.0 AF x | less than 1.0 AF x | less than 1.0 AF x | 25-3.0 AF | |
| PET adhesion at 10°C (kg/25 mm) | | | | | less than 1.0 AF x | less than 1.0 AF x | less than 1.0 AF x | less than 1.0 AF x | 1.5-2.0 AF | |
| PET adhesion at 5°C (kg/25 mm) | | | | | less than 1.0 AF x | less than 1.0 AF x | less than 1.0 AF x | less than 1.0 AF x | less than 1.0 AF x | |

An initial creep test was carried out in order to evaluate the initial adhesive strength of the moisture-curable hot melt adhesives of Examples and Comparative Examples and a PET adhesiveness test was carried out in order to evaluate the adhesiveness to slightly adhesive materials.

Moreover, viscosity was measured in order to evaluate applicability (or coatability) performance.

The test methods and the evaluation criteria are described below.

### Initial creep test

To a plywood kept in a constant temperature box of 35°C for 12 hours or more, each of the moisture-curable hot melt adhesives of Examples and Comparative Examples was applied in an applied amount of 40 g/m² using a roll coater. After keeping the applied plywood again in the constant temperature box of 35°C for one minute, a PET sheet without surface treatment was put on the plywood and then the PET sheet was pressed with a roll pressing machine, so that lamination was carried out.
Cuts were made at a 25-mm wide interval on the PET sheet and a weight of 100 g was hung vertically from the 25-mm wide PET sheet in the constant temperature box of 35°C and was allowed to stand for 10 minutes, and then a distorted distance that varied with time was measured. The weight and the PET sheet were connected with a clamp.
The evaluation criteria are given below.
×: The distorted distance became 150 mm within five minutes.
Δ: The distorted distance became 150 mm at a time of from 5 minutes to 10 minutes.
○: The distorted distance yielded for 10 minutes was 50 mm to 100 mm.
⊙: The distorted distance yielded for 10 minutes was less than 50 mm.

### Test of adhesiveness to PET sheet

Plywoods kept respectively in constant temperature boxes (23°C, 10°C, 5°C) for 12 hours or more were used for the test. The method of lamination is the same as that of the initial creep test. After the lamination, the laminated articles of a plywood and a PET sheet were put again into the respective constant temperature boxes (23°C, 10°C, 5°C), followed by aging for three days.
After the aging, cuts were made at a 25-mm wide interval on each PET sheet and then an end of the PET sheet was peeled about 20 mm long. The end was held with a clamp and then a peeling test was carried out.
The conditions of the peeling test are as follows.
A 180° peeling test was carried out at a tensile rate of 100 mm/min using a tensile tester at respective temperatures (23°C, 10°C, 5°C), so that adhesiveness to a PET sheet was evaluated. The evaluation criteria are given below.
×: A PET-side interface (AF) was observed at less than 2.0 kg/25 mm.
○: A PET--side interface (AF) was observed at 2.0 kg/25 mm or more.
⊙: Material failure (or Fracture) (MF) of a plywood was observed at 2.0 kg/25 mm or more.

### Viscosity measurement

A viscometer (manufactured by Brookfield Engineering Laboratories, Inc.) was used. A predetermined amount (10.5 g) of a molten moisture-curable hot melt adhesive was poured into a viscosity tube, and a spindle was inserted into the viscometer and was left at rest at 120°C for 30 minutes. Then, melt viscosity was measured at 120°C. A No. 27 Spindle was used for the viscosity measurement at 120°C.
As shown in Table 2, the moisture-curable hot melt adhesives of the Examples are superior in both initial adhesive strength and adhesiveness to a slightly adhesive material (PET sheet). In particular, the moisture-curable hot melt adhesives of the Examples are remarkably superior to the moisture-curable hot melt adhesives of the Comparative Examples in adhesiveness to a PET sheet at low temperatures (5°C, 10°C).
Moreover, the moisture-curable hot melt adhesives of the Examples have melt viscosities ranging from 7, 000 to 9, 000 mPa·s and are lower in viscosity than the moisture-curable hot melt adhesives of the Comparative Examples and suitable for application at low temperatures.

### INDUSTRIAL APPLICABILITY

The present invention provides a moisture-curable hot melt adhesive. The moisture-curable hot melt adhesive of the present invention can be used for exterior materials and interior materials for building materials, wooden floor, lamination of a decorative sheet onto a base material, profile wrapping, and the like. In order to bond a slightly adhesive material to a substrate especially in winter, the moisture-curable hot melt adhesive of the present invention can be used effectively.

### Related application

This application claims priority under the Paris Convention, Article 4 based on the patent application of Application No. 2010-189337 filed in Japan on August 26, 2010. This priority patent application is incorporated in its entirety into the present specification by reference.

## Claims

1. A moisture-curable hot melt adhesive, comprising:
an urethane prepolymer having an isocyanate group at its end, and
(A) an acrylic polymer, wherein
the acrylic polymer (A) includes a polymer (A1) containing a moiety derived from a (meth) acrylic acid derivative (a1) having an alkyl group with 6 or more carbon atoms.

2. The moisture-curable hot melt adhesive according to claim 1, wherein the acrylic polymer (A) has an alicyclic structure.

3. The moisture-curable hot melt adhesive according to claim 1 or 2, wherein the (meth) acrylic acid derivative (a1) contains at least one selected from cyclohexyl (meth)acrylate and isobornyl (meth)acrylate.
